Europäisches Patentamt

European Patent Office

Office européen des brevets

(19)

(11) Veröffentlichungsnummer: **0 245 791**
**B1**

(12) **EUROPÄISCHE PATENTSCHRIFT**

(45) Veröffentlichungstag der Patentschrift: **31.10.90**

(21) Anmeldenummer: **87106679.1**

(22) Anmeldetag: **08.05.87**

(51) Int. Cl.⁵: **F 01 L 1/34, F 16 D 3/10**

(54) Vorrichtung zur relativen Drehlagenänderung zweier in Antriebsverbindung stehender Wellen, insbesondere zwischen in einem Maschinengehäuse einer Brennkraftmaschine gelagerten Kurbelwelle und Nockenwelle.

(30) Priorität: **14.05.86 DE 3616234**

(43) Veröffentlichungstag der Anmeldung:
**19.11.87 Patentblatt 87/47**

(45) Bekanntmachung des Hinweises auf die Patenterteilung:
**31.10.90 Patentblatt 90/44**

(84) Benannte Vertragsstaaten:
**DE FR GB IT SE**

(56) Entgegenhaltungen:
**EP-A-0 112 494**
**DE-A-3 210 914**
**DE-A-3 320 835**
**DE-C- 368 775**
**US-A-3 258 937**

(73) Patentinhaber: **Bayerische Motoren Werke Aktiengesellschaft**
**Patentabteilung AJ-30 Postfach 40 02 40**
**Petuelring 130**
**D-8000 München 40 (DE)**

(72) Erfinder: **Thoma, Josef**
**Am Schnepfenweg 42**
**D-8000 München 50 (DE)**

(74) Vertreter: **Bücken, Helmut**
**Bayerische Motoren Werke Aktiengesellschaft**
**Postfach 40 02 40 Petuelring 130 - AJ-30**
**D-8000 München 40 (DE)**

**Beschreibung**

Vorrichtung zur relativen Drehlagenänderung zweier in Antriebsverbindung stehender Wellen, insbesondere zwischen in einem Maschinengehäuse einer Brennkraftmaschine gelagerten Kurbelwelle und Nockenwelle.

Die Erfindung geht gemäß dem Oberbegriff des unabhängigen Patentanspruches von der DE-C 368 775 aus.

Bei dieser bekannten Vorrichtung wirkt die Nokkenwelle an ihrem Ende über Geradführungen mit einem axial verschiebbaren Koppelglied zusammen, das über am Außenumfang angeordnete Schraubengang-Führungen in der Nabe eines Antriebsrades der Nockenwelle drehbeweglich angeordnet ist. Das Antriebsrad seinerseits ist über den Außenumfang der Nabe im Gehäuse der Brennkraftmaschine drehbeweglich gelagert.

Um das von der Kurbelwelle der Brennkraftmaschine mittelbar angetriebene Antriebsrad relativ zur Nockenwelle für variable Ventilsteuerzeiten verstellen zu können, greift am Koppelglied eine am Maschinengehäuse gesondert vorgesehene Betätigungsanordnung an.

Damit bei betriebspunktabhängig veranlaßter Drehwinkelverstellung der Nockenwelle die Reibungskräfte zwischen dieser und dem Koppelglied, weiter zwischen dem Koppelglied und der Nabe des Antriebsrades sowie zwischen dessen Nabe und der Lagerbohrung im Maschinengehäuse klein bleiben, ist jeweils ein gewisses Spiel zwischen den vorgenannten, beweglichen Verbindungen notwendig. Beim Betrieb der Brennkraftmaschine wirken aus der Betätigung der Gaswechselventile auf die Nockenwelle fortlaufend Querbelastungen ein, die in den vorgenannten, mit Spiel ausgebildeten Führungen der einzelnen Bauelemente zu zusätzlichem Verschleiß führen. Dieser Verschleiß vergrößert das erforderliche Spiel mit dem Nachteil einer zunehmend ungenau werdenden Steuerung oder Regelung der Drehwinkel- bzw. Drehlagen-Änderung zwischen der Nockenwelle und der Kurbelwelle.

Um jedoch den Verschleiß in den Führungen der vorgenannten Bauteile bei erforderlichem Spiel geringzuhalten, weisen die Führungen relativ zum axialen Verstellweg lange Kontaktflächen auf, wodurch sich eine Lagerbohrung im Maschinengehäuse für die Nabe des Antriebsrades von beträchtlicher Länge ergibt. Die in der bekannten Vorrichtung ausgeführte mittelbare Lagerung der Nockenwelle an ihrem freien Wellenende über das Koppelglied in der Antriebsrad-Nabe erfordert für diese einen erheblichen Bauraum.

Der Erfindung liegt die Aufgabe zugrunde, eine Vorrichtung der eingangs genannten Art für eine aktive Verstellung in entgegengesetzten Richtungen in einer platzsparenden Anordnung auszubilden.

Diese Aufgabe wird mit den im Kennzeichen des unabhängigen Patentanspruches angegebenen Merkmalen gelöst. Mit der nach der Erfindung in einer stirnseitigen Ausnehmung der Welle, insbesondere der Nockenwelle, angeordneten Nabe des Antriebsrades ist in vorteilhafter Weise eine platzsparende Ausgestaltung erreicht. Bekanntlich sind insbesondere Nockenwellen an ihrem dem Antriebsrad benachbarten Ende über ein im Durchmesser relativ großes Lager im Maschinengehäuse gelagert, so daß eine in diesem Bereich angeordnete stirnseitige Ausnehmung ihrerseits im Durchmesser zur Aufnahme der Nabe des Antriebsrades relativ groß gewählt werden kann. Durch diese Ausgestaltung kann die Verstellanordnung im wesentlichen in axialer Richtung in die Nockenwelle hineinverlegt angeordnet sein, so daß für die Verstellanordnung kein zusätzlicher Platz bzw. Einbauraum benötigt wird. Dies ermöglicht es ferner, die am Maschinengehäusedeckel vorgesehene Befestigungsanordnung möglichst nahe an das freie Ende der Nockenwelle heranzurücken und somit den Einbauraum zwischen dem Antriebsrad am freien Ende der Nockenwelle und dem benachbarten Maschinengehäusedeckel auszunutzen.

Weitere vorteilhafte Ausgestaltungen der Erfindung sind in den Unteransprüchen angegeben. So ist zur Senkung der Herstellkosten der Nockenwelle die wellenseitige Geradverzahnung in einem gesonderten Einsatz ausgebildet, der in einer als Stufenbohrung ausgebildeten Ausnehmung drehfest angeordnet wird. Mit der Anordnung und Ausgestaltung des Antriebsrades nach Anspruch 3 ist eine in axialer Richtung kurzbauende Anordnung gegeben. Durch die lösbare Verbindung des Antriebsrades mit dem Flansch der Nabe kann durch in Umfangsrichtung verlaufende Schlitze im Flansch der Nabe das Antriebsrad korrekt zur Kurbelwelle der Brennkraftmaschine eingestellt werden. Anspruch 4 beschreibt ein in axialer Richtung vorteilhaft kurzbauendes und hochbelastbares Gelenk, das beiderseits eines auf der Koppelstange angeordneten Scheibenflansches anliegende radiale Nadellager umfaßt. Zur Schmierung dieses Gelenkes ist das Koppelglied mit einer zentrischen Schmierbohrung ausgerüstet, die über eine im Bereich eines weiteren Gleitlagers angeordnete Verteilkammer in Verbindung steht, die mit Schmieröl zur Schmierung dieses Gleitlagers versorgt wird, wie aus Merkmalen des Anspruches 10 hervorgeht.

Mit den vorgenannten Ansprüchen 1—4 ist der Grundgedanke einer in einem maschinengeführten Endbereich hohl ausgebildeten Nockenwelle beschrieben, wobei in der konzentrischen Höhlung bzw. Ausnehmung der wesentliche Teil der Verstellanordnung baulich integriert ist. Diese Maßnahme wird zusätzlich vorteilhaft unterstützt durch ein auf einem Wellenbund am freien Ende der Welle bzw. Nockenwelle drehwinkelbeweglich geführtes Antriebsrad. Mit dieser Ausgestaltung kann ein vor der Stirnseite des hohlen Wellenendes gegebener Einbauraum der Maschine für die Unterbringung einer Betätigungsanordnung vorteilhaft genutzt werden, ohne die Baulänge der Maschine nachteilig zu beeinflussen. Ein weiterer Vorteil der Erfindung ist, daß sie mit jeder beliebigen Betätigungsanordnung kombiniert werden kann. Vorzugsweise ist die Betätigungsanordnung von hydraulischer Bauart, wie dies Anspruch 5 beschreibt.

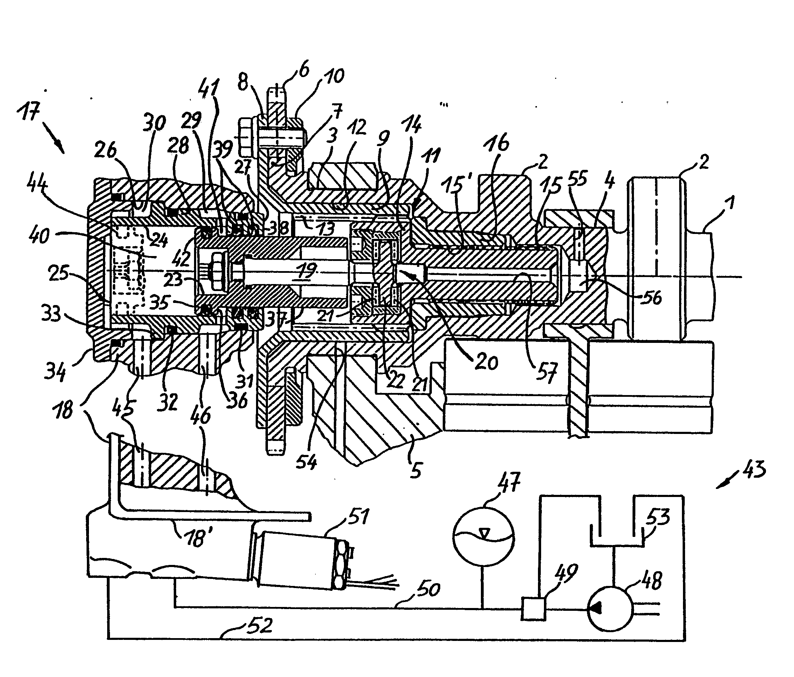

Hydraulische Betätigungsanordnungen für Vorrichtungen zur relativen Drehlagenänderung einer angetriebenen Welle sind z. B. aus der US 3 258 937 sowie der EP-A 112 494 bekannt. Bei diesen Vorrichtungen sind die hydraulisch verstellbaren Elemente in drehenden Teilen der Vorrichtungen angeordnet, wobei das Hydraulikmedium aus feststehenden Teilen der Brennkraftmaschine in die rotierenden Teile der Betätigungsanordnung zugeführt wird. Über den zwischen den feststehenden Teilen und den rotierenden Teilen erforderlichen Lagerspalt ergeben sich mit Druckverlusten verbundene Leckagen. Diese Druckverluste sind durch erhöhte Förderung zu kompensieren. Eine diese Nachteile vermeidende Betätigungsanordnung mit einer hydraulisch doppelt wirkenden Zylinder/Kolben-Einheit ist aus Fig. 7 der DE-A 32 10 914 bekannt. Bei dieser bekannten Vorrichtung ist die Zylinder/Kolben-Einheit zu der eine Gehäusewand der Brennkraftmaschine durchsetzenden Nockenwelle koaxial angeordnet und wirkt unter Zwischenschaltung eines Wälzlagers auf ein im freien Endbereich der Nockenwelle verschiebbar, aber drehfest angeordnetes Antriebsrad ein. Diese vorbeschriebene Vorrichtung ist durch die unterschiedlichen, paßgenauen Führungen bei engen Toleranzen hohen mechanischen Belastungen unterworfen. Diese Nachteile vermeidet die im Kennzeichen des Anspruches 5 beschriebene Anordnung, die außerdem montagefreundlich ist.

Mit den Merkmalen der Ansprüche 6 und 7 ist eine getrennte Bauweise der hydraulischen Betätigungsanordnung erzielt, die in vorteilhafter Weise gegenüber dem freien Ende der verstellbaren Welle zu deren Verstellanordnung am Maschinengehäusedeckel platzsparend angeordnet werden kann. Der gesonderte Zylinder der Betätigungsanordnung ermöglicht ferner die integrale Anordnung von hydraulischen Leitungen in dem die Betätigungsanordnung aufnehmenden Maschinengehäusedeckel, wobei an einem Teil dieser Leitungen nach Anspruch 8 ein von der Brennkraftmaschine separates Hydrauliksystem anschließbar ist. Mit einem separaten Hydrauliksystem kann ein relativ hohes Druckniveau gewählt werden, wodurch sich neben kleinen Bauabmessungen der Betätigungsanordnung ferner relativ hohe Verstellgeschwindigkeiten erzielen lassen, und zwar in beiden Verstellrichtungen.

Schließlich ist im Anspruch 10 durch engbenachbarte Lager der verstellbaren Welle für diese eine besonders steife Lagerung beschrieben, womit Auswirkungen aus Querbelastungen einer verstellbaren Nockenwelle auf die Verstellanordnung minimiert werden. Weiter werden Querbelastungen und Fluchtungsfehler zwischen der Verstellanordnung und der Betätigungsanordnung über ein nach Anspruch 4 als Nadellager ausgebildetes Drehgelenk in Verbindung mit dem ausschließlich über elastische Dichtringe geführten Kolben der Betätigungsanordnung zusätzlich reduziert.

Die Erfindung ist anhand eines bevorzugten, in der Zeichnung dargestellten Ausführungsbeispiels beschrieben.

Eine Nockenwelle 1 mit Nocken 2 zur Betätigung von nicht gezeigten Gaswechselventilen einer Brennkraftmaschine ist über Gleitlager 3 und 4 in einem teilsweise dargestellten Maschinengehäuse 5 der Brennkraftmaschine drehbeweglich gelagert. in einem anderen, nicht gezeigten Teil des Maschinengehäuses 5 der Brennkraftmaschine ist eine Kurbelwelle drehbeweglich angeordnet, die über ein endloses Treibmittel mit einem Antriebsrad 6 der Nockenwelle 1 in Antriebsverbindung steht. Das Antriebsrad 6 ist auf einem dem Gleitlager 3 der Nockenwelle 1 benachbarten Wellenbund 7 drehbeweglich zentriert. Das relativ zur Nockenwelle 1 drehwinkelbeweglich angeordnete Antriebsrad 6 steht über einen Flansch 8 mit einer Nahe 9 in Verbindung. Über den Flansch 8 einerseits und einem Anschlagring 10 andererseits ist das Antriebsrad 6 auf dem Wellenbund 7 axial gesichert.

Die über das Gleitlager 3 in ihrem Endbereich geführte Nockenwelle 1 weist eine konzentrische und als Stufenbohrung ausgestaltete Ausnehmung 11 auf. Die Ausnehmung 11 umfaßt im Bereich des Gleitlagers 3 eine Lagerbohrung 12, in der die Nahe 9 des Antriebsrades 6 drehbeweglich gelagert ist. Die mit dem Antriebsrad 6 drehfest verbundene Nahe 9 ist rohrartig gestaltet und an der Innenseite mit einer Schräg- bzw. Schraubverzahnung 13 ausgebildet. Mit der Schrägverzahnung 13 der Nahe 9 in formschlüssigen Eingriff steht ein Koppelglied 14, das über eine Geradverzahnung 15 in formschlüssigen Eingriff mit der Nockenwelle 1 steht. Die wellenseitige Geradverzahnung 15' ist in einem Einsatz 16 ausgebildet, der in einem gegenüber der Lagerbohrung 12 im Durchmesser kleineren Teil lagefixiert angeordnet und als eine Bundbüchse ausgebildet ist.

Das einerseits mit der Schräg- bzw. Schraubverzahnung 13 der Nabe 9 des Antriebsrades 6 und andererseits über die Geradverzahnung 15 mit der Nockenwelle 1 formschlüssig zusammenwirkende Koppelglied 14 dient der Übertragung des Drehmomentes vom Antriebsrad 6 auf die Nockenwelle 1. Das eine drehfeste Verbindung zwischen dem Antriebsrad 6 und der Nockenwelle 1 bewirkende Koppelglied 14 ist in der Schräg- bzw. Schraubverzahnung 13 und in der Geradverzahnung 15 axial verlagerbar angeordnet, wobei die für eine relative Drehlagenänderung des Antriebsrades 6 zur Nockenwelle erforderliche axiale Verlagerung des Koppelgliedes 14 durch eine Betätigungsanordnung 17 bewirkt wird.

Die Betätigungsanordnung 17 ist in einem Maschinengehäusedeckel 18 angeordnet und umfaßt eine hydraulisch doppelt wirkende Zylinder/Kolben-Einheit. Die baulich von der im wesentlichen das Antriebsrad 6 und das Koppelglied 14 umfassenden Verstellanordnung getrennte Betätigungsanordnung 17 bzw. die Zylinder/Kolben-Einheit ist mit dem Koppelglied 14 kuppelbar ausgebildet. Hierfür dient eine Kuppelstange 19, die mit dem Koppelglied 14 über ein drei Freiheitsgrade umfassendes Gelenk 20 in Verbindung steht. Das Gelenk 20 umfaßt in einer stirnseitigen Ausnehmung des Koppelgliedes 14 axial beabstandete Nadellager 21, zwischen denen ein mit der Kuppelstange 19 verbundener Scheibenflansch 22 angeordnet ist. Damit können axiale Abweichungen zwischen dem mit der Nokkenwelle 1 drehenden Koppelglied 14 und der am Maschinengehäusedeckei 18 angeordneten Betätigungsanordnung 17 ausgeglichen werden.

Die am Koppelglied 14 angeordnete Kuppelstange 19 ist mit einem Kolben 23 der Betätigungsanordnung 17 über eine lösbare Verbindung kuppelbar. Für die Zugänglichkeit der lösbaren Verbindung zwischen der Kuppelstange 19 und dem Kolben 23 umfaßt die Betätigungsanordnung 17 einen Zylinder 24, der an seinem der Versteilanordnung abgewandten Ende 25 offen gestaltet ist zur Anordnung des Kolbens 23. Der Zylinder 24 ist gesondert ausgebildet und in eine im Maschinengehäusedeckel 18 angeordnete Stufenbohrung 26 einsteckbar. Er weisteinen in Einsteckrichtung vorderen, der Verstellanordnung zugewandten Außenumfangsabschnitt 27 von relativ kleinem Durchmesser und einem demgegenüber hinteren, axial beabstandeten Außenumfangsabschnitt 28 von relativ großem Durchmesser auf, wobei der Außenumfangsabschnitt 28 zwei Ringkanäle 29 und 30 voneinander trennt. Weiter weist der in der Stufenbohrung 26 über die Außenumfangsabschnitte 27 und 28 zentrierte und mittels elastischer Ringe 31 und 32 in Umfangsnuten dicht angeordnete Zylinder 24 einen dem hinteren Außenumfangsabschnitt 28 zugeordneten Anschlagbund 33 auf. Über diesen Anschlagbund 33 einerseits und einem am Zylinder 24 an seinem offenen Ende 25 stirnseitig anliegenden Abschlußdeckel 34 andererseits ist der Zylinder 24 in der Stufenbohrung 26 des Maschinengehäusedeckels 18 axial fixiert. Der Abschlußdeckel 34 ist am Maschinengehäusedeckel 18 befestigbar.

Der Kolben 23 ist im Zylinder 24 lediglich über einen elastischen Dichtring 35 geführt. An seiner der Versteilanordnung zugewandten Stirnseite 36 weist der Kolben 23 ferner einen Dichtungsschaft 37 von relativ großem Durchmesser auf. Der Dichtungsschaft 37 durchsetzt einen radial nach innen gerichteten Bund 38 am Zylinder 24 im Bereich des vorderen Außenumfangsabschnittes 27 mit relativ großem Spiel. Zur Führung des Dichtungsschaftes 37 dienen elastische Dichtringe 39 in axial beabstandeten Umfangsnuten im Bund 38. Durch die ausschließliche Führung des Kolbens 23 und seines Dichtungsschaftes 37 über die elastischen Dichtungen 35 und 39 werden aus möglichen Fluchtungsfehlern herrührende Belastungen am Gelenk 20 reduziert. Weiter ist mit dieser Ausgestaltung eine Körperschallbrücke zwischen der Nockenwelle 1 bzw. ihrer Verstellanordnung und der am Maschinengehäusedeckel 18 angeordneten Betätigungsanordnung 17 vermieden.

Der Kolben 23 teilt den innenraum des Zylinders 24 in eine erste Steuerkammer 40 und in eine zweite Steuerkammer 41 ein. Die erste Steuerkammer 40 ist in axialer Richtung einerseits vom Abschiußdeckel 34 und andererseits von der freien Stirnseite 42 des Kolbens 23 begrenzt. Dagegen ist die Steuerkammer 41 in axialer Richtung von der relativ schmalen Stirnseite am Bund 38 des Zylinders 24 und der Stirnseite 36 des Kolbens 23 begrenzt. Der Kolben 23 ist somit als Differenzialkolben ausgebildet, mit dem Vorteil, daß in der Steuerkammer 41 mit den kleineren Wirkflächen aus einem von der Brennkraftmaschine gesonderten Hydrauliksystem 43 das Hydraulikmedium mit einem relativ hohen Druck anliegen kann. Der in der Steuerkammer 41 wirkende Druck dient zur Verlagerung des Kolbens 23 in seine durch gestrichele Linien angedeutete Ausgangsiage 44. Dies bedeutet für das mit dem Kolben 23 gekuppelte Koppelglied 14 eine im linken Teil der Nabe 9 vorgesehene Ausgangslage, die für die Nockenwelle 1 einen Versteilung nach "spät" bzw. eine späte Drehlage bedeutet. Um ein einwandfreies Arbeiten der Nockenwelle 1 bei fehlendem Mediumsdruck in den Steuerkammern 40, 41 sicherzustellen, ist die Schrägbzw. Schraubverzahnung 13 in ihrer Steigung so gewählt, daß das Antriebsrad 6 in Antriebs- bzw. Dreihrichtung die Nockenwelle 1 überholt, bis der durch das Koppelglied 14 verschobene Kolben 23 in seiner Ausgangslage 44 am Abschlußdeckel 34 anschlägt.

Die Steuerkammern 40 und 41 stehen mit den zum Zylinder 24 konzentrisch angeordneten Ringkanälen 29 und 30 in mediumsführender Verbindung, wobei die Ringkanäle 29 und 30 jeweils mit einer im Maschinengehäusedeckel 18 gesondert ausgebildeten Leitung 45 und 46 verbunden sind. Beide Leitungen 45 und 46 sind an das Hydrauliksystem 43 angeschlossen, das einen das Hydraulikmedium unter Druck bevorratenden Speicher 47 umfaßt. Der mit einer von der Brennkraftmaschine angetriebenen Pumpe 48 und ein Druckregelventil 49 in Wirkverbindung stehende Druckspeicher 47 wirkt über eine Leltung 50 aufdie Leitungen 45 und 46. Die beiden maschinenseitigen Leitungen 45 und 46 sind mittels einer Ventileinrichtung 51 steuerbar. Die Ventileinrichtung 51 kann nach einem Kennfeid der Brennkraftmaschine gesteuert werden für eine betriebspunktabhängige Versteilung der Nockenwelle 1. In dem Hydrauliksystem 43 ist schließlich mit 52 eine Rücklaufieltung zu einem Tank 53 bezeichnet.

Ein über die Leitung 45 dem Steuerraum 40 zugeführtes Hydraulikmedium bewirkt eine Versteilung des Kolbens 23 und damit des Koppelgliedes 14, das in seiner axialen Verlagerung durch Anschlagen an nicht gezeigte Anschläge des Zylinders 24 begrenzt ist. Eine derartige Verlagerung des Koppelgliedes 14 in Richtung Einsatz 16 bewirkt eine "Vorversteilung" bzw. eine Versteilung nach "früh" der Nockenwelle 1 relativ zum Antriebsrad 6.

Hinsichtlich guter Zugänglichkeit für die Wartung ist die Ventileinrichtung 51 als eine baulich gesonderte Funktionseinheit ausgebildet, die im wesentlichen parallel zur Längsrichtung der Brennkraftmaschine und zu deren Abtriebsende hin gerichtet an einer Seitenwand 18' des Maschinengehäusedeckels 18 anordbar ist.

Die Brennkraftmaschine umfaßt für die Nockenwelle 1 ein vom Hydrauliksystem 43 separiertes Schmiersystem, das eine im Gleitlager 3 radial angeordnete Schmierölbohrung 54 umfaßt, die zu der die Nabe 9 des Antriebsrades 6 aufnehmenden Lagerbohrung 12 in der Ausnehmung 11 führt. Weiter gehört zu dem Schmiersystem der Brennkraftmaschine eine im Gleitlager 4 radial angeordnete Schmierölbohrung 55 zu einer im Endbereich der Ausnehmung 11 in der Nockenwelle 1 ausgebildeten Verteilkammer 56. Aus der Verteilkammer 56 wird das Schmieröl sowohl der Geradverzahnung 15 des Koppelgliedes 14 als auch über eine zentrische Bohrung 57 im Koppelglied 14 dem Gelenk 20 zugeführt.

Bei der erfindungsgemäßen Vorrichtung sind in der Betätigungsanordnung 17 keine durch Rotation beanspruchten Dichtungen 35, 39 an Kolben 23 und Dichtungsschaft 37 vorgesehen. Neben der damit gegebenen erhöhten Sicherheit gegen Leckage ist für den evtl. Fall einer Leckage mit der Vorrichtung ferner erreicht, daß bei schadhaften Dichtungen 35, 39 das Hydraulikmedium in das innere der Brennkraftmaschine austritt und somit ein die Umgebung belastender Verlust vermieden ist. Dies ist von wesentlicher Bedeutung im Hinblick auf die mit relativ hohen Drücken eines gesonderten Hydrauliksystems beaufschlagbare Betätigungsanordnung 17, wodurch hinsichtlich des schwankenden Antriebsmomentes der drehenden Nockenwelle 1 ein günstiges Verhältnis von Verstellmoment zu vorgenanntem Antriebsmoment für eine stabile, relative Positionierung von Nockenwelle 1 und Antriebsrad 6 erreicht wird.

**Patentansprüche**

1. Vorrichtung zur relativen Drehlagenänderung einer angetriebenen Welle, insbesondere einer zur Kurbelwelle einer Brennkraftmaschine verstellbaren Nockenwelle, umfassend eine wellenseitig vorgesehene Verstellanordnung und eine wellenfern am Maschinengehäuse (Deckel 18) angeordnete Betätigungsanordnung (17), wobei die Verstellanordnung ein die Welle (Nockenwelle 1) mit einem gesondert angeordneten, relativ zur Welle drehwinkelbeweglichen Antriebsrad (6) verbindendes, axial verschiebbares Koppelglied (14) umfaßt, und das Koppelglied (14) mit der Betätigungsanordnung (17) über eine maschinenseitig geführt angeordnete Kuppelstange (19) unter Zwischenschaltung eines drei Freiheitsgrade umfassenden Drehgelenkes (20) in Verbindung steht, und ferner die Kuppelstange (19) mit der Betätigungsanordnung (17) in lösbarer Verbindung steht, dadurch gekennzeichnet,

daß die Welle (1) in einem maschinengeführten Endbereich (Gleitlager 3) eine konzentrische Ausnehmung (11) aufweist, die der drehwinkelbeweglichen Lagerung einer Nabe (9) des Antriebsrades (6) dient, das auf einem am freien Wellenende angeordneten Wellenbund (7) drehwinkelbeweglich zentriert und axial gesichert angeordnet ist, wobei die im wesentlichen in der Ausnehmung (11) sich erstreckende Nabe (9) am Innenumfang mit einer Schräg- bzw. Schraubverzahnung (13) versehen ist zum antriebsradseitigen Eingriff des Koppelgliedes (14), das mit einer in einem weiteren Bereich der Ausnehmung (11) angeordneten Geradverzahnung (15') wellenseitig in Eingriff steht.

2. Vorrichtung nach Anspruch 1, dadurch gekennzeichnet, daß die Ausnehmung (11) eine Stufenbohrung ist mit einer die Nabe (9) aufnehmenden Lagerbohrung (12), und einer demgegenüber im Durchmesser kleineren Bohrung zur Aufnahme eines als Bundbüchse ausgebildeten, lagefixierten Einsatzes (16) mit einer Geradverzahnung (15') als wellenseitige Axialführung für das mit einer Geradverzahnung (15) versehene Koppelglied (14).

3. Vorrichtung nach Anspruch 2, dadurch gekennzeichnet, daß die rohrartig gestaltete Nabe (9) eine Schräg- bzw. Schraubverzahnung (13) als antriebsseitige Dreh- und Axialführung des Koppelgliedes (14) mit einer zur Dreh- bzw. Antriebsrichtung des Antriebsrades (6) gleichgerichteten Steigung aufweist, wobei die Nabe (9) und das Antriebsrad (6), beide über einen Flansch (8) miteinander drehfest verbunden, durch jeweils eine stirnseitige Anlage des Flansches (8) und eines diesem abgewandt dem Antriebsrad (6) zugeordneten Anschlagringes (10) am Wellenbund (7) der Welle (1) axial mit Spiel gesichert sind.

4. Vorrichtung nach den Ansprüchen 1—3, dadurch gekennzeichnet, daß das Drehgelenk (20) in einer stirnseitigen Ausnehmung des Koppelgliedes (14) axial beabstandete, radial gerichtete Gleit- oder Wälzeinrichtungen (Nadellager 21) umfaßt, zwischen denen ein mit der Kuppelstange (19) verbundener Scheibenflansch (22) angeordnet ist.

5. Vorrichtung nach den Ansprüchen 1—4, bei der die Betätigungsanordnung (17) die Kuppelstange (19) über einen durch Mediumsdruck verlagerbaren Kolben (23) betätigt, und die Verbindung von Kuppelstange (19) und Kolben (23) über das freie Ende der Betätigungsanordnung (17) herstellbar ist, und die Betätigungsanordnung (17) eine hydraulisch doppelt wirkende Zylinder/Kolben-Einheit ist, dadurch gekennzeichnet, daß ein Zylinder (24) an seinem der Verstellanordnung abgewandten Ende (25) offen gestaltet ist zur Anordnung des Kolbens (23), der in seiner durch die Schräg- bzw. Schraubverzahnung (13) bewirkten Ausgangslage (44) mit Teilen seiner freien Stirnseite (42) an einem gesonderten, den Zylinder (24) überdeckenden Abschlußdeckel (34) anschlägt, der am Maschinengehäusedeckel (18) befestigbar ist.

6. Vorrichtung nach Anspruch 5, dadurch gekennzeichnet,

daß der Zylinder (24) gesondert ausgebildet und in eine im Maschinengehäusedeckel (18) angeordnete Stufenbohrung (26) einsteckbar ist, und

einen in Einsteckrichtung vorderen, der Verstellanordnung zugewandten Außenumfangsabschnitt (27) von relativ kleinem Durchmesser und einen demgegenüber hinteren, axial beabstandeten Außenumfangsabschnitt (28) von relativ großem Durchmesser aufweist,

der zwei Ringkanäle (29, 30) voneinander trennt,

daß ferner der in der Stufenbohrung (26) über die Außenumfangsabschnitte zentrierte und mittels elastischer Ringe (31, 32) in Umfangsnuten dicht angeordnete Zylinder (24) einen dem hinteren Außenumfangsabschnitt zugeordneten Anschlagbund (33) aufweist,

der zusammen mit dem stirnseitig am Zylinder anschlagenden Abschlußdeckel (34) den Zylinder (24) axial fixiert.

7. Vorrichtung nach Anspruch 5 und 6, dadurch gekennzeichnet,

daß der Kolben (23) im Zylinder (24) über einen elastischen Dichtring (35) geführt ist,

daß der Kolben ferner an seiner der Verstellanordnung zugewandten Stirnseite (36) einen Dichtungsschaft (37) von relativ großem Durchmesser aufweist,

der über in axial beabstandeten Umfangsnuten eines radial nach innen gerichteten Bundes (38) am Zylinder (24) im Bereich des vorderen Außenumfangsabschnittes (27) angeordnete elastische Dichtringe (39) geführt ist.

8. Vorrichtung nach den Ansprüchen 5—7, dadurch gekennzeichnet,

daß die mit Steuerkammern (40, 41) beiderseits des Kolbens (23) im Zylinder (24) in Verbindung stehenden Ringkanäle (29, 30) jeweils mit einer im Maschinengehäusedeckel (18) gesondert ausgebildeten Leitung (45, 46) verbunden sind, und

beide Leitungen mit einem von der Brennkraftmaschine separaten Hydrauliksystem (43) mit einem Hydraulikmedium unter Druck bevorratenden Speicher (47) in Verbindung stehen,

wobei die Leitungen zu der Steuerkammer (40, 41) mittels einer Ventileinrichtung (51) steuerbar sind.

9. Vorrichtung nach Anspruch 8, dadurch gekennzeichnet,

daß die Ventileinrichtung (51) eine baulich gesonderte Funktionseinheit ist,

die an einer Seitenwand (18') des Maschinengehäusedeckels (18) anordbar ist.

10. Vorrichtung nach den Ansprüchen 1—9, dadurch gekennzeichnet,

daß die Welle (1) dem Wellenbund (7) benachbart ein Gleitlager (3) aufweist,

von dem aus eine radiale Schmierölbohrung (54) zu der die Nabe (9) des Antriebsrades (6) aufnehmenden Lagerbohrung (12) in der Ausnehmung (11) führt,

daß ein weiteres Gleitlager (4) zwischen benachbarten Nocken (2) der Welle angeordnet ist.

**Revendications**

1. Dispositif de variation de la position angulaire relative de deux arbres en liaison d'entraînement, en particulier d'un vilebrequin et d'un arbre à cames logés dans le carter d'un moteur à combustion interne,

comprenant un dispositif de réglage, prévu du côté de l'arbre, et un dispositif d'actionnement (17), disposé à distance de l'arbre, sur le carter du moteur (couvercle 18), où

le dispositif de réglage comprend un organe d'accouplement (14) déplaçable axialement, reliant l'arbre (arbre à came 1) à la roue d'entraînement (6) disposée séparément, de manière à pouvoir faire varier l'angle de rotation par rapport à l'arbre à cames, et

l'organe d'accouplement (14) étant relié au dispositif d'actionnement (17) par l'intermédiaire d'une tige d'accouplement (19), guidée du côté moteur, avec interposition d'une articulation tournante (20) comprenant trois degrés de liberté, et en outre

la tige d'accouplement (19) étant reliée au dispositif d'actionnement (17) d'une manière démontable,

caractérisé en ce que

l'arbre à cames (1) présente, dans une zone d'extrémité guidée dans le moteur (palier à glissement 3), un évidement concentrique (11), qui

sert de logement mobile en rotation à un moyeu (9) de la roue d'entraînement (6), qui

est disposée, centrée de manière à être mobile en de rotation et bloquée axialement, sur une collerette d'arbre (7) disposée sur l'extrémité libre de l'arbre à cames,

le moyeu (9) s'étendant essentiellement dans l'évidement (11) étant pourvu sur la périphérique intérieure d'une denture inclinée, respectivement hélicoïdale (13), en vue d'entrer en contact, du côté de la roue d'entraînement, avec l'organe d'accouplement (14), qui

est en contact, du côté de l'arbre à cames, avec une denture droite (15') disposée dans une autre zone de l'évidement (11).

2. Dispositif selon la revendication 1, caractérisé en ce que

l'évidement (11) est un alésage à étages avec un alésage de palier (12) recevant le moyeu (9), et

un alésage, de plus petit diamètre que celui-ci, pour loger une garniture (16), faisant fonction de douille à collerette et de position fixe, avec une denture droite (15') servant de guidage axial, côté arbre à cames, pour l'organe d'accouplement (14) pourvu d'une denture droite (15).

3. Dispositif selon la revendication 2, caractérisé en ce que

le moyeu (9), de forme tubulaire, présente une denture inclinée, respectivement hélicoïdale (13), servant de guidage en rotation et axial à l'organe d'accouplement (14), avec une pente orientée dans le même sens que le sens de rotation, respectivement d'entraînement de la roue d'entraînement (6),

le moyeu (9) et la roue d'entraînement (6), tous deux reliés à rotation par l'intermédiaire d'une bride (8), sont fixés axialement avec un jeu sur la collerette d'arbre (7) de l'arbre (1), respectivement au moyen d'un appui frontal de la bride (8) et d'une bague de butée (10) éloignée de la bride (8) et tournée vers la roue d'entraînement (6).

4. Dispositif selon les revendications 1 à relativement étroite située sur la collerette 38 du cylindre 24 et par la face frontale 36 du piston 23. Le piston 23 est ainsi réalisé sous la forme d'un piston différentiel, avec pour avantage que le fluide sous pression situé dans la chambre de commande 41 présentant les plus petites surfaces actives et provenant d'un système hydraulique 43 séparé du moteur à combustion interne peut appuyer avec une pression relativement élevée. La pression agissant dans la chambre de commande 41 sert à produire le déplacement du piston 23 dans sa position initiale 44, indiquée en pointillé. Ceci signifie pour l'organe d'accouplement 14 accouplé au piston 23 une position initiale prévue dans 1 partie gauche du moyeu 9, qui signifie un déplacement de réglage vers "retard", respectivement une position en rotation retardée, pour l'arbre à came 1. Afin d'assurer un fonctionnement parfait de l'arbre à came 1 en cas de manque de pression de fluide dans les chambres de commande 40, 41, on choisit pour la denture inclinée, respectivement hélicoïdale, 13 une pente telle que la roue d'entraînement 6 "devance" l'arbre à came 1 dans le sens d'entraînement, respectivement de rotation, jusqu'à ce que le piston 23 déplacé par l'organe d'accouplement 14 bute dans sa position initiale 44 sur le couvercle de fermeture 34.

Les chambres de commande 40 et 41 sont placées en liaison de communication hydraulique avec les canaux annulaires 29 et 30 disposés concentriquement, les canaux annulaires 29 et 30 étant respectivement reliés à des conduites 45 et 46 réalisées séparées dans le couvercle 18 du carter moteur. Les deux conduites 45 et 46 sont raccordées sur le système hydraulique 43, qui comprend un accumulateur 47 constituant une réserve préalable de fluide hydraulique sous pression. L'accumulateur de 3, caractérisé en ce que

l'articulation tournante (20) comprend des dispositifs à glissement ou à roulement (palier à aiguilles 21), espacés axialement dans un évidement frontal de l'organe d'accouplement (14) et orientés radialement,

dispositifs entre lesquels est disposée une bride à disque (22) reliée à la tige d'accouplement (19).

5. Dispositif selon les revendications 1 à 4, dans lequel le dispositif d'actionnement (17) actionne la tige d'accouplement (19) par l'intermédiaire d'un piston (23) déplaçable au moyen d'une pression de fluide, et

la liaison de la tige d'accouplement (19) et du piston (23) étant susceptible d'être établie par l'intermédiaire de l'extrémité libre du dispositif d'actionnement (17), et

le dispositif d'actionnement (17) étant un ensemble piston-cylindre hydraulique à double action,

caractérisé en ce qu'

un cylindre (24) situé à son extrémité (25) éloignée du dispositif de réglage est de configuration ouverte, en vue de disposer le piston (23), qui vient en butée dans sa position initiale (44), provoquée par la denture inclinée, respectivement hélicoïdale (13), avec des parties de sa face frontale libre (42), sur un couvercle de fermeture (34) séparé, recouvrant le cylindre, couvercle qui

est fixable sur le couvercle (18) du carter moteur.

6. Dispositif selon la revendication 5, caractérisé en ce que

le cylindre (24) est séparé et enfichable dans un alésage étagé (26) disposé dans le couvercle (18) du carter moteur, et

présente une section périphérique extérieure (27) de diamètre relativement petit, située à l'avant dans le sens d'enfichage, tournée vers le dispositif de réglage, et

une section périphérique extérieure (28) de diamètre relativement grand, située à l'arrière de la première section, écartée axialement,

qui sépare l'un de l'autre deux canaux annulaires (29, 30),

qu'en outre, le cylindre (24), qui est disposé dans l'alésage étagé (26), centré par l'intermédiaire des sections de périphérie extérieure et, de manière étanche, par l'intermédiaire des bagues (31, 32) élastiques, situées dans des rainures périphériques, présente une collerette de butée (33), tournée vers la section de périphérie extérieure arrière, qui

fixe axialement le cylindre (24), conjointement avec le couvercle de fermeture (34) venant en butée sur le cylindre.

7. Dispositif selon les revendications 5 et 6, caractérisé en ce que

le piston (23) est guidé dans le cylindre (24) par l'intermédiaire d'une bague d'étanchéité (35) élastique,

le piston présente en outre sur sa face frontale (36) tournée vers le dispositif de réglage, une tige d'étanchéité (37) de diamètre relativement grand,

qui est guidée par l'intermédiaire de bagues d'étanchéité (39) élastiques, disposées dans des gorges périphériques espacées axialement, d'une collerette (38) orientée radialement vers l'intérieur, sur le cylindre (24), dans la zone de la section périphérique extérieure avant (27).

8. Dispositif selon les revendications 5 à 7, caractérisé en ce que

les canaux annulaires (29, 30) reliés aux chambres de commande (40, 41), des deux côtés du piston (23) dans le cylindre (24), sont respectivement reliées à une conduite (45, 46) réalisée séparément dans le couvercle (18) du carter moteur, et

les deux conduites sont reliées à un système hydraulique (43) séparé du moteur à combustion interne, comportant un accumulateur (47) stockant au préalable sous pression un fluide hydraulique, les conduites allant à la chambre de commande (40, 41) étant commandables au moyen d'un dispositif à soupape (51).

9. Dispositif selon la revendication 8, caractérisé en ce que

le dispositif à soupape (51) est un ensemble fonctionnel dont la construction est séparée,

qui est susceptible d'être appliqué sur une paroi latérale (18') du couvercle (18) du carter moteur.

10. Dispositif selon les revendications 1 à 9, caractérisé en ce que

l'arbre (1) à proximité de la collerette d'arbre (7) comporte un palier à glissement (3),

duquel part un alésage d'huile de lubrification (54) radial, allant en direction de l'alésage de palier (12), recevant le moyeu (9) de la roue d'entraînement (6), dans l'évidement (11),

un autre palier à glissement (4) étant disposé entre des cames (2) voisines de l'arbre (1).

**Claims**

1. A device for the relative variation of position in rotation of a driven shaft, especially of a cam shaft displaceable in relation to the crank-shaft of an internal combustion engine,

comprising a shifting arrangement provided on the shaft and an actuating arrangement (17) arranged remotely from the shaft on the engine housing (lid 18),

where the shifting arrangement comprises an axially-displaceable coupling member (14) connecting the shaft (cam shaft 1) with a separately-arranged drive wheel (6) movable in angle of rotation in relation to the shaft, and the coupling member (14) is in connection with the actuating arrangement (17) through a coupling rod (19) arranged for guidance on the engine with interposition of a swivel joint (20) comprising three degrees of freedom, and further

the coupling rod (19) is in disengageable connection with the actuating arrangement (17),

characterised in that the shaft (1) comprises, in an engine guided end region (plain bearing 3), a concentric aperture (11) which

serves for the supporting, with movable angle of rotation, of a hub (9) of the drive wheel (6), which

is centred and arranged in axially-secured manner, with movable angle of rotation, on a shaft collar (7) arranged on the free shaft end, while

the hub (9) extending substantially in the aperture (11) is provided on the internal circumference with a skew or helical toothing (13) for engagement of the coupling member (14) on the drive wheel side, which member

is in engagement on the shaft side with a spur toothing (15') arranged in a further region of the aperture (11).

2. A device according to Claim 1, characterised in that the aperture (11) is a stepped bore with a bearing bore (12) receiving the hub (9), and

a bore of smaller diameter compared therewith, for the reception of an insert (16) of fixed position, formed as collar bush, with a spur toothing (15') as a shaft-side axial guide for the coupling member (14) provided with a spur toothing (15).

3. A device according to Claim 2, characterised in that the hub (9) of tube-type configuration possesses a skew or helical toothing (13) as a rotational and axial guide on the drive side of the coupling member (14) with a pitch in the same direction as the direction of rotation or drive of the drive wheel (6), while

the hub (9) and the drive wheel (6), both connected fast in rotation with one another through a flange (8), are secured axially with play by an end abutment in each case of the flange (8) and of a stop ring (10), facing away from the latter and associated with the drive wheel (6), on the shaft collar (7) of the shaft (1).

4. A device according to Claims 1—3, characterised in that the swivel joint (20) comprises axially-spaced, radially-directed sliding or rolling devices (needle bearings 21) in an end aperture of the coupling member (14),

between which there is arranged a disc flange (22) connected with the coupling rod (19).

5. A device according to Claims 1—4, in which the actuating arrangement (17) actuates the coupling rod (19) through a piston (23) displaceable by medium pressure and

the connection of coupling rod (19) and piston (23) can be produced through the free end of the actuating arrangement (17), and

the actuating arrangement (17) is a hydraulically double-acting cylinder/piston unit,

characterised in that a cylinder (24) is of open configuration at its end (25) remote from the shifting arrangement for the arrangement of the piston (23), which

in its initial position (44) effected by the skew or helical toothing (13) strikes with parts of its free end face (42) on a separate closure lid (34) covering the cylinder (24), which lid can be secured to the engine housing lid (18).

6. A device according to Claim 5, characterised in that the cylinder (24) is made separately and is insertable into a stepped bore (26) arranged in the engine housing lid (18), and comprises

an external circumferential section (27) of relatively large diameter which is forward in the insertion direction and faces the shifting arrangement, and

an axially-spaced external circumferential section (28) of relatively large diameter to the rear in relation thereto,

which separates two annular passages (29, 30) from one another,

further in that the cylinder (24), centred in the stepped bore (26) by means of the external circumferential sections and arranged tightly in circumferential grooves by means of elastic rings (31, 32), comprises a stop collar (33) allocated to the rear external circumferential section,

which collar, together with the closure lid (34) abutting at the end on the cylinder, axially fixes the cylinder (24).

7. A device according to Claims 5 and 6, characterised in that

the piston (23) is guided in the cylinder (24) by means of an elastic sealing ring (35),

in that the piston further comprises on its end (36) facing the shifting arrangement a sealing shank (37) of relatively large diameter,

which is guided by means of elastic sealing rings (39) arranged in axially-spaced circumferential grooves of a radially inwardly-directed collar (38) on the cylinder (24) in the region of the forward external circumferential section (27).

8. A device according to Claims 5—7, characterised in that the annular passages (29, 30) in connection with control chambers (40, 41) on both sides of the piston (23) in the cylinder (24) are each connected with a conduit (45, 46) formed separately in the engine housing lid (18), and both conduits are in communication with a hydraulic system (43), separate from the internal combustion engine, with a reservoir (47) storing hydraulic medium under pressure, while the conduits to the control chamber (40, 41) are controllable by means of a valve arrangement (51).

9. A device according to Claim 8, characterised in that the valve arrangement (51) is a constructionally separate functional unit, which can be arranged in a side wall (18') of the engine housing lid (18).

10. A device according to Claims 1—9, characterised in that the shaft (1) comprises a plain bearing (3) adjacent to the shaft collar (7), from which a radial lubricating oil bore (54) leads to the bearing bore (12) accommodating the hub (9) of the drive wheel (6) in the aperture (11), in that a further plain bearing (4) is arranged between adjacent cams (2) of the shaft.